# EUROPÄISCHE PATENTANMELDUNG

(11) **EP 0 887 136 A2**
(43) Veröffentlichungstag der Anmeldung: **30.12.1998**
(21) Anmeldenummer: 98107335.6
(22) Anmeldetag: 22.04.1998
(51) Int. Cl.: B23D 47/04, B23D 45/00

(54) **Vorrichtung zum Ablängen von Hohlkammerprofilen mit Gummidichtung**

(30) Priorität: 24.06.1997 DE 19726866
(71) Anmelder: RAPID MASCHINENBAU GmbH, 72131 Ofterdingen (DE)
(72) Erfinder: Adam, Helmut, 72116 Mössingen (DE)
(74) Vertreter: Weber, Otto Ernst, Dipl.-Phys.

(57) **Zusammenfassung**

Vorrichtung zum Ablängen von Hohlkammerprofilen (1) mit einer Gummidichtung (3), wobei das Hohlkammerprofil (1) auf einer Richtfläche (5) einer Maschine in einer definierten Lage im wesentlichen quer zu einer Bearbeitungseinheit (6) fixierbar ist, so daß ein die Gummidichtung (3) aufweisender Profilkörperbereich (2a) frei zugänglich ist,
dadurch **gekennzeichnet**,
daß eine Spannvorrichtung (15) zum Spannen der Gummidichtung (3) vorgesehen ist und
daß die Spannvorrichtung (15) zum lokalen Spannen der Gummidichtung (3) im Bereich eines auszuführenden Schnitts ausgebildet ist.

## Beschreibung

Die Erfindung betrifft eine Vorrichtung zum Ablängen von Hohlkammerprofilen mit Gummidichtungen, wobei ein Holkammerprofil auf einer Richtfläche einer Maschine in einer definierten Lage im wesentlichen quer zu einer Bearbeitungseinheit fixierbar ist, so daß ein die Gummidichtung aufweisender Profilkörperbereich frei zugänglich ist.

Seit einigen Jahren werden zur Herstellung von Fensterrahmen Hohlkammerprofile mit Gummidichtungen verwendet, bei welchen die Gummidichtung in einen hierfür am Hohlkammerprofilkörper vorgesehenen Kanal eingezogen oder bei der Profilherstellung eingearbeitet (extrudiert) wird. Der Hohlkammerprofilkörper besteht aus einem leicht zu bearbeitenden Material, vorzugsweise Kunststoff oder Aluminium. Die Gummidichtungen sind aus einem weichen Gummi gefertigt, der sich bei einer Bearbeitung, beispielsweise bei einem Ablängen mit einem Sägeblatt, beliebig an dieses anlegt.

Beim Zuschneiden von Profilleisten ist es bekannt, diese auf einer Richtfläche im wesentlichen quer zu einer Bearbeitungseinheit, beispielsweise einem Sägeaggregat aufzulegen und mit einer Spanneinheit in horizontaler Richtung zu fixieren. Beim Ablängen von Hohlkammerprofilen mit Gummidichtungen wurde jedoch mit dieser Art der Spannung eine schlechte Qualität der Schnittflächen, insbesondere bei 45^{o} Schnitten (Gehrungsschnitt), erzielt, da das Hohlkammerprofil und die Gummidichtung aus unterschiedlichen Materialien bestehen, die sich bei der Bearbeitung unterschiedlich verhalten.

Die beim Ablängen gewählte Vorschubgeschwindigkeit des Sägeblatts und die Geometrie der Schneidezähne des Sägeblatts richten sich im wesentlichen nach dem Material des Hohlkammerprofils. Beim Schneiden und vor allem beim Austritt des Sägeblatts aus der Gummidichtung, insbesondere an dem sich verjüngendem Ende der Gummidichtung, führt der hohe Vorschub dazu, daß die Gummidichtung anfängt sich zu bewegen und ausreißt, wodurch eine schlechte Qualität der Schnittfläche an der Gummidichtung erzielt wird. Bei Gummidichtungen die eingezogen und nicht extrudiert sind, kann dies soweit führen, daß die Gummidichtung im Schnittbereich durch das Sägeblatt ganz aus dem Profil gezogen wird.

Die schlechte Qualität der Schnittflächen wirkt sich besonders nachteilig bei einer Weiterverarbeitung aus, beispielsweise dem Verschweißen der abgelängten Profile zu einem Fensterrahmen. Eine ausgerissene und über die Schnittfläche herausragende Gummidichtung bewirkt die Entstehung eines Wulstes an der Verbindungsnaht der Profile beim Verschweißen, was zu einer Qualitätsminderung des Endproduktes Fensterrahmen führt. Wird die Gummidichtung ganz aus dem Profil gezogen, so können die abgesägten Hohlkammerprofile gegebenenfalls nicht weiter verarbeitet werden, oder der Fehler müßte manuell beseitigt werden. Der Materialverlust und der zusätzliche Zeitaufwand führen somit zu einer Verteuerung des Endproduktes.

Es ist die **Aufgabe** der Erfindung, eine Vorrichtung zum Ablängen von Hohlkammerprofilen mit Gummidichtung zu schaffen, durch welche die Ausschußrate beim Ablängen reduziert und zugleich die Qualität der zum Endprodukt zu verarbeitenden Profilleisten verbessert wird.

Erfindungsgemäß wird diese Aufgabe für eine gattungsgemäße Vorrichtung mit den Merkmalen des Oberbegriffs des Anspruchs 1 durch die kennzeichnenden Merkmale dieses Anspruchs gelöst.
Weitere Ausführungsformen ergeben sich aus den Unteransprüchen.

Die Erfindung basiert auf dem Grundgedanken, die Gummidichtung der Hohlkammerprofile während des Ablängens zu fixieren, um einen Schnitt ohne die Gefahr des Ausreißens oder des Herausziehens der Gummidichtung ausführen zu können und um eine saubere Schnittfläche zu erzielen, so daß ein nachträgliches manuelles "Nacharbeiten" vermieden wird, und die Profilleisten anschließend mit guten Ergebnissen weiterverarbeitet werden können.

Erfindungsgemäß wird hierzu eine Vorrichtung zum Ablängen von Hohlkammerprofilen mit Gummidichtung verwendet, bei welcher eine Profilleiste auf einer Richtfläche in einer definierten Lage im wesentlichen quer zu einer Bearbeitungseinheit fixierbar ist, so daß die Gummidichtung frei zugänglich ist, und bei welcher zusätzlich eine Spannvorrichtung zum Spannen der Gummidichtung vorgesehen ist, und die Spannvorrichtung zum lokalen Spannen der Gummidichtung im Bereich eines auszuführenden Schnittes ausgebildet ist. Mit dieser zusätzlichen Spannvorrichtung wird vermieden, daß sich die Gummidichtung während des Schneidvorgangs frei bewegt und somit gewährleistet ist, daß saubere und exakte Schnittflächen erzeugt werden. Durch ein Spannen oder Fixieren der Gummidichtung in unmittelbarer Nähe des Kontaktbereichs der zu bearbeitenden Profilleiste mit einem zum Ablängen verwendeten Sägeblatt sind die im Schnittbereich entstehenden Torsionskräfte infolge der Spannkraft und der durch den Vorschub des Sägeblatts entstehenden Kraft, die entgegengesetzt parallel zueinander wirken, auch bei hohen Vorschüben vernachlässigbar. Das zusätzliche Spannen der Gummidichtung bewirkt auch, daß das gesamte Hohlkammerprofil besser und exakter im Schnittbereich fixiert ist, wodurch exakt ausgeführte Schnittflächen erreicht und die Profilleisten besser weiterverarbeitet werden können. Dies führt letztendlich dazu, daß durch Vermeidung von Ausschußteilen und nachzuarbeitenden Teilen die Kosten für ein Endprodukt reduziert werden können und gleichzeitig dessen Qualität verbessert wird.

In einer besonders vorteilhaften Ausführungsform weist die Spannvorrichtung ein Spannelement zum Spannen der Gummidichtung auf, welches mittels pneumatischen Antrieben entlang zweier im wesentlichen senkrecht zueinander verlaufender Achsen X, Y translatorisch verfahrbar ist, wobei die Achsen eine Ebene definieren, die parallel zu der Ebene ist, in welcher ein Schnitt ausgeführt wird.

Durch ein Verfahren entlang zweier Achsen ist das Spannelement genauestens in bezug auf die zu fixierende Gummidichtung der Hohlkammerprofile, die auf der Richtfläche der Maschine liegen, positionierbar. Bei der Anordnung der Spannvorrichtung in unmittelbarer Nähe des Sägeblatts ist berücksichtigt, daß das Spannelement möglichst kurze Verfahrstrecken zur Positionierung benötigt.

Da der zusätzliche Vorgang der Fixierung der Gummidichtung nicht auf Kosten der Dauer des eigentlichen Prozesses des Ablängens von Hohlkammerprofilen gehen soll, hat sich in einer erfindungsgemäßen Ausführungsform der Vorrichtung die Verwendung pneumatischer Antriebe in Form von Pneumatikzylindern für das vertikale und horizontale Verfahren des Spannelements als besonders vorteilhaft erwiesen. Dank einer hohen Strömungsgeschwindigkeit und kleiner Masse der Luft ist ein schnelles Verfahren und Positionieren des Spannelements sowie schnelles Umsteuern beim Spannungs-/Lösungs-Vorgang und beim Zurückziehen des Spannelements in die ursprüngliche Position möglich. Die vertikale Absenkbewegung des Spannelements ist somit beispielsweise synchron mit einer Zustellbewegung eines Spannanschlags in eine Spannposition ausführbar, welches die abzulängenden Hohlkammerprofile auf der Richtfläche einer Maschine fixiert.

Auch für die zum Spannen benötigte mechanisch und kraftmässig begrenzte Endlagenbewegung des Spannelements sind die pneumatischen Zylinder dank der großen Elastizität der Luft besonders geeignet. Da zur Betätigung des Antriebssystems ein niedriger Betriebsdruck ausreicht und die pneumatischen Zylinder zur Übertragung einer kleinen Leistung ausgelegt sind, sind die während des Spannvorgangs auf die Gummidichtungen wirkenden Kräfte kleiner als der Widerstand des Hohlkammerprofilkörpers, und somit besteht keine Gefahr, daß die Gummidichtungen während des Spannens abgeschert oder beschädigt werden.

In einer zweckmäßigen Ausführungsform der Spannvorrichtung ist das eigentliche Spannelement im wesentlichen bügelförmig oder U-förmig ausgebildet, so daß die beiden vertikalen Schenkel die eigentlichen Anschläge zur Fixierung der Gummidichtungen bilden. Die Form des Spannelements ermöglicht das Fixieren eines oder gleichzeitig zweier Gummidichtungen von abzulängenden Hohlkammerprofilen.
Um Profilhöhenunterschiede auszugleichen, ist es möglich die beiden vertikalen Schenkel (Anschläge) federnd miteinander zu verbinden.

Für die Anpassung an unterschiedliche Hohlkammerprofil-Geometrien sind keine Wechselteile erforderlich, d.h. es entfällt ein umständlicher oder zeitintensiver Umbau der Vorrichtung. Diese kann also im wesentlichen profilherstellerunabhängig verwendet werden.

Ein weiterer Vorteil der zusätzlichen Spannvorrichtung ist darin zu sehen, daß über ihren gesamten Spannbereich, der im wesentlichen durch die Hübe der Pneumatikzylinder für das Verfahren des Spannbügels in vertikaler und horizontaler Richtung bestimmt ist, infolge der Elastizität der Luft, eine nahezu konstante Spannkraft gegeben ist.

In einer zweckmäßigen Ausführungsform der erfindungsgemässen Spannvorrichtung werden die Enden oder die Anschlagbereiche der vertikalen Spannbügelschenkel so ausgebildet, daß für das Ablängen von Hohlkammerprofilen unter 90^{o} und wahlweise 45^{o}, wie es üblicherweise beim Zuschneiden von Fensterrahmenleisten erforderlich ist, vorteilhafterweise der gleiche Spannbügel verwendet werden kann, ohne daß eine Umrüstung der Spannvorrichtung erforderlich ist.

Vorzugsweise wird die erfindungsgemäße Spannvorrichtung im Fall eines Doppelsägeautomaten an dem Sägeaggregat montiert und ist mit diesem verschwenkbar, wenn Schnitte in bestimmten Winkellagen auszuführen sind. Die Anbringung der Spannvorrichtung an das Sägeaggregat selbst ist von besonderem Vorteil, da der Abstand der Fixierstelle der Gummidichtung zum auszuführenden Schnitt kleinstmöglich gehalten werden kann und damit immer gewährleistet ist, daß die Richtung der Spann- oder Fixierkraft parallel zur Vorschubrichtung des Sägeblatts ist.

In einer weiteren sehr vorteilhaften Ausführungsform ist die Spannvorrichtung nachträglich an eine bereits vorhandene Maschine, beispielsweise einen Doppelsägeautomaten, anbaubar. Im Unterschied zu der üblichen Montagestelle an dem sich schwenkenden Sägeaggregat, wird bei einem nachträglichen Anbau der Vorrichtung diese mittels hierfür vorgesehenen Anpaßteilen fest an einen bestehenden Teil der Maschine angebaut. Üblicherweise kann eine derartige nachträgliche Installation der Vorrichtung mit geringem zeitlichem und kostenmäßigem Aufwand durchgeführt werden, da auch meistens auf ein vorhandenes Druckluftnetz zurückgegriffen werden kann.

Wird beispielsweise ein Doppelsägeautomat mit einer erfindungsgemäßen Spannvorrichtung für Gummidichtungen ausgerüstet, so sieht eine zweckmäßige Ausführungsform vor, den Funktionsablauf der Spannvorrichtung, d.h. die vertikale und horizontale Verschiebung des Spannbügels zur Erreichung der Spannposition sowie den Rückzug aus dieser Position, d.h. die Bewegung zur Spannungslösung, in den gesamten automatischen Ablauf eines Sägevorgangs einzuschließen. Dies ist vollpneumatisch mit Tasterventilen ausführbar, die Impulsventile auslösen, und hat den Vorteil, daß die Anordnung nur auf die Energiequelle Druck angewiesen und dadurch weniger störanfällig ist.
Bei einem komplexen Funktionsablauf eines Doppelsägeautomaten, der beispielsweise zusätzlich mit einer Zu- und Abführeinrichtung von Profilstangen und mit der erfindungsgemäßen Spannvorrichtung ausgerüstet ist, kann diese auch speicherprogrammierbar vorgesehen sein.

Die Erfindung ist in den Zeichnungen dargestellt und wird im folgenden näher beschrieben. Es zeigen:
- Fig. 1: eine schematische Querschnittsansicht eines Hohlkammerprofils mit Gummidichtung;
- Fig. 2: eine schematische Ansicht von vorn einer Gesamtanordnung zum Ablängen von Hohlkammerprofilen mit Gummidichtungen unter Verwendung einer erfindungsgemäßen Spannvorrichtung gemäß einer ersten Ausführungsform;
- Fig. 3: ist eine Detailansicht von der Seite der erfindungsgemäßen Spannvorrichtung in einer Stellung für einen 90^{o}-Schnitt; und
- Fig. 4: ist eine Detailansicht von der Seite der erfindungsgemäßen Spannvorrichtung in einer Stellung für einen 45^{o}-Schnitt (Gehrungsschnitt).
- Fig. 5 bis Fig. 8: schematische Ansichten von vorn des in Fig. 2 gezeigten erfindungsgemäßen Ausführungsbeispiels der Spannvorrichtung in verschiedenen Phasen des Funktionsablaufs, wobei in

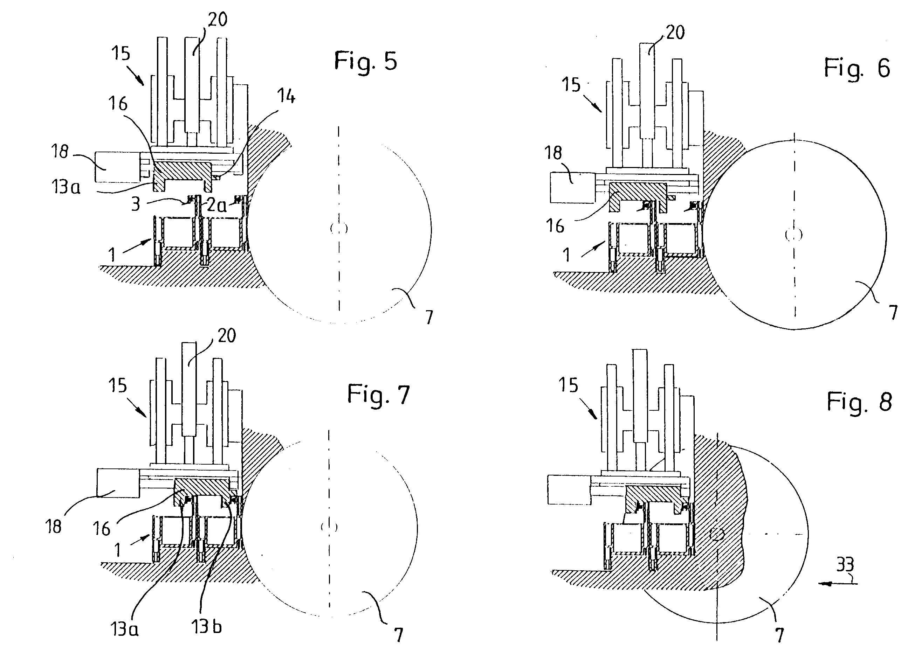

- Fig. 5: die Spannvorrichtung und das Sägeblatt in ihren Grundstellungen sind,
- Fig. 6: die Spannvorrichtung in einer vertikal auf das Profil abgesenkten Stellung und das Sägeblatt in seiner Grundstellung ist,
- Fig. 7: die Spannvorrichtung in einer horizontal vorgeschobenen und die Gummidichtung fixierenden Stellung zeigt und das Sägeblatt in der Grundstellung, und
- Fig. 8: die Spannvorrichtung in der in Fig. 5 gezeigten Stellung ist und das Sägeblatt in einer vorgeschobenen Schneidstellung ist.

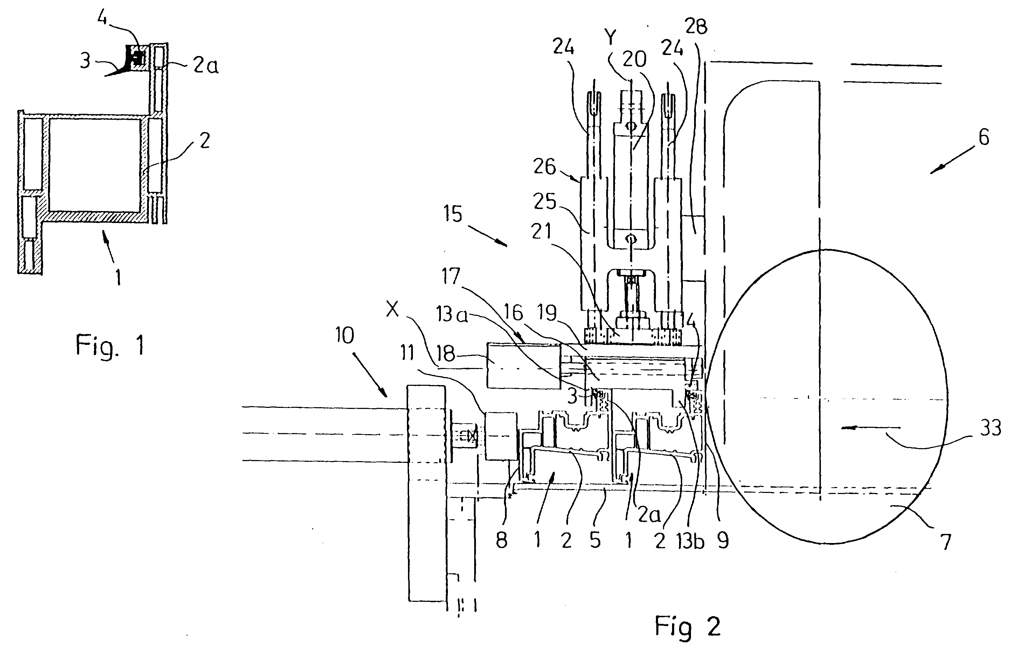

In der Fig. 1 ist schematisch und beispielhaft ein Querschnitt eines Hohlkammerprofils 1 gezeigt, und welches einen Profilkörper 2, der insbesondere aus Kunststoff oder Aluminium besteht und eine Gummidichtung 3, die in einer Nut oder Rille 4 des Profilkörpers 2 eingezogen oder an diesem extrudiert ist, aufweist. Derartig konfigurierte Hohlkammerprofile 1 werden üblicherweise für die Herstellung von Fensterrahmen verwendet, wobei hierzu die stabförmigen Hohlkammerprofile auf Sägeautomaten auf die für die Fensterrahmengröße erforderliche Länge unter 45^{o} abgesägt werden. Danach werden die auf Gehrung zusammenzufügenden Flächen thermisch aufgeheizt, so daß sich daran aufgeschmolzene Bereiche ergeben, die durch Inkontaktbringen, Beaufschlagung mit Druck und Erkalten eine Verbindungsnaht bilden. Voraussetzung zur Erzielung genauer Verbindungsnähte ist das Vorhandensein präzise ausgeführter Schnittflächen unter dem Gesichtspunkt einer Winkelgenauigkeit und gleichermaßen unter dem Gesichtspunkt der Qualität der gesamten Schnittfläche an den Leistenenden.

In der Fig. 2 ist eine schematische Ansicht von vorn einer Gesamtanordnung zum Ablängen von Hohlkammerprofilen 1 unter Verwendung einer erfindungsgemäßen Spannvorrichtung 15 auf einer Sägemaschine gezeigt. In der Gesamtanordnung werden zwei abzulängende Hohlkammerprofile 1 hintereinander auf einer Richtfläche 5 der Sägemaschine mit einem oder zwei Sägeaggregaten 6 im wesentlichen quer zu einer Vorschubrichtung eines Sägeblatts 7 in Stellung gebracht. Dabei wird eines der Hohlkammerprofile 1 an einer Stirnfläche 8, die einer Spanneinheit 10, deren Konstruktion dem Fachmann bekannt ist und daher auf diese an dieser Stelle nicht näher eingegangen wird, zugewendet ist, mit einem Druckstück 11 der Spanneinheit 10, das in Längsrichtung der Richtfläche 5 verfahrbar ist, gespannt. Dabei wird das dem Sägeblatt zugewendete Hohlkammerprofil 1 mit einer Stirnfläche 9 gegen einen an der Maschine vorgesehenen Anschlag (nicht dargestellt) gedrückt, so daß die beiden hintereinander angeordneten und in Kontakt befindlichen Hohlkammerprofile 1 in einer definierten und zum Ablängen geeigneten Stellung gehalten sind. In dieser Stellung sind die Hohlkammerprofile 1 derart ausgerichtet, daß die Profilbereiche 2a mit der Gummidichtung 3 nach oben gerichtet und von oben frei zugänglich sind.

Die zusätzliche Spannvorrichtung 15 zum Spannen der Gummidichtungen 3 oder zu deren Fixieren an den Profilkörper 2 während eines Sägevorgangs weist einen im wesentlichen U-förmig ausgebildeten Spannbügel 16 mit zwei Schenkeln 13a, 13b und einer Nase 14 auf, die während eines Spannvorgangs als Anschläge wirken. Ein erster Pneumatikzylinder 18, der als Antrieb für den Spannbügel 16 dient, steuert eine translatorische Bewegung des Spannbügels 16 entlang einer Führung 19 in Richtung einer X-Achse. Der Hub des ersten Pneumatikzylinders 18 bestimmt den Spannbereich der Spannvorrichtung 15 in horizontaler Richtung.

Zur Positionierung des Spannbügels 16 in bezug auf das Hohlkammerprofil 1 in vertikaler Richtung entlang einer Y-Achse ist ein zweiter Pneumatikzylinder 20 vorgesehen. Dieser ist über eine Tragkonstruktion 21 mit einer darunterliegenden Anordnung 17, die im wesentlichen dem ersten Pneumatikzylinder 18, die Führung 19 und den translatorisch verfahrbaren Spannbügel 16 aufweist, verbunden, so daß die Anordnung 17 vertikal unter der Wirkung des zweiten Pneumatikzylinders 20 auf und ab translatorisch verfahrbar ist. An der Tragkonstruktion 21 sind ferner zwei damit fest verbundene Gleitstangen 24 vorgesehen, die in einer Führung 25 gleiten.
Die Führung 25 und der zweite Pneumatikzylinder 20 sind miteinander verbunden, und bilden eine Einheit, die beispielsweise über ein Anbauteil 28 an ein Sägeaggregat 6 montierbar und mit diesem zusammen schwenkbar ist.

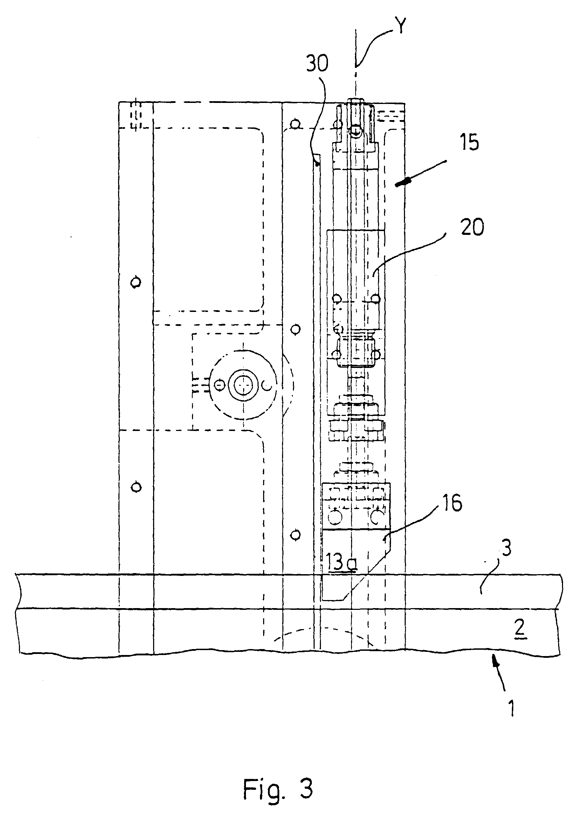

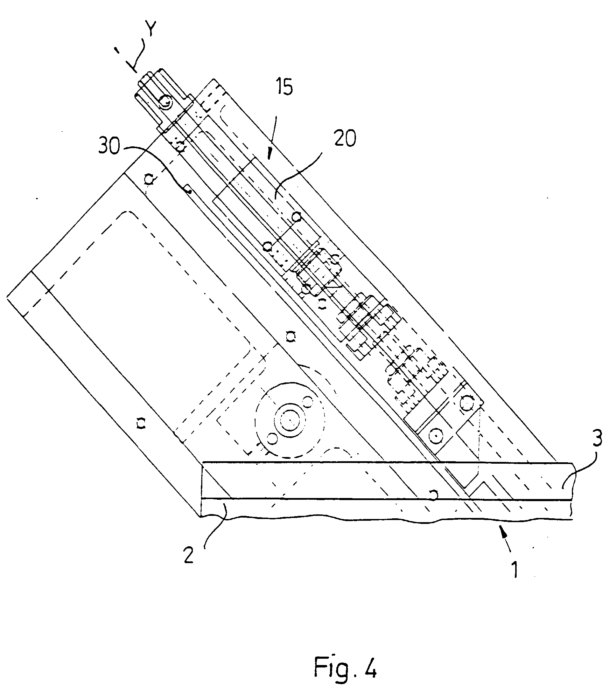

In Fig. 3 ist die erfindungsgemäße Spannvorrichtung 15 in einer Detailansicht von der Seite gezeigt. In der Darstellung ist eine Spannsituation gezeigt, in welcher ein 90^{o}-Schnitt mit einem Sägeblatt ausgeführt wird. Aus der Zeichnung ist die Anordnung der Spannvorrichtung 15 zu erkennen, die die Gummidichtung 3 des Hohlkammerprofils 1 in unmittelbarer Nähe einer am Sägeaggregat 6 vorgesehenen schlitzförmigen Durchführung 30 für ein Sägeblatt 7 spannt. In Fig. 4 ist eine ähnliche Darstellung der erfindungsgemäßen Spannvorrichtung 15 in einer Spannsituation für einen Gehrungsschnitt (45^{o}-Schnitt) gezeigt.

Fig. 5 bis 8 zeigen schematisch den Ablauf eines Vorganges des Ablängens von Hohlkammerprofilen 1 mit Gummidichtung 3, unter Verwendung einer erfindungsgemäßen Spannvorrichtung 15. Zur Vereinfachung der Darstellung ist die in Fig. 1 dargestellte Spanneinheit 10 weggelassen.

In Fig. 5 befinden sich die Hohlkammerprofile 1 in einer definierten Position in bezug auf das in einer Startposition dargestellte Sägeblatt 7. Die Spannvorrichtung 15 befindet sich in ihrer obersten Position oberhalb der Profilbereiche 2a mit der zu spannenden Gummidichtung 3. Der Spannbügel 16 befindet sich in einer rechten äußeren Position.

Ausgehend von dieser Stellung des Spannbügels 16 erfolgt durch Aktivierung des Pneumatikzylinders 20 ein vertikales Absenken des Spannbügels 16 bis dieser in Berührung mit dem Profilkörperbereich 2a gelangt. Das Sägeblatt 7 befindet sich weiterhin in der Startposition.

Das Inkontaktbringen des Spannbügels 16 mit dem Profilkörperbefeich 2a bedeutet für den Pneumatikzylinder 20 das Erreichen seiner untersten Endlagenposition. Nach Ablauf einer einstellbaren Zeit wird der Pneumatikzylinder 18 den Spannbügel 16 aus seiner rechten äusseren Position nach links verschieben, bis die Schenkel 13a und 13b die Gummidichtungen an den Profilkörper 2 drücken. Diese Spannsituation ist in der Fig. 7 dargestellt.

Das Erreichen dieser Spannsituation, in welcher die Kraft des Pneumatikzylinders 18 dem Widerstand des Profilkörpers 2 entgegensteht, löst ein Steuersignal für einen Vorschub des Sägeblatts in Richtung des Pfeils 33 aus.

Fig. 8 zeigt eine Phase kurz vor Beendigung des Vorgangs des Ablängens. Hat das Sägeblatt 7 den Schnitt ausgeführt, erfolgt sein durch ein entsprechendes Steuersignal ausgelöster Rückzug in umgekehrte Richtung zurück in die Startposition. Das Erreichen dieser Position löst ein Steuersignal für den Pneumatikzylinder 18 aus, welcher den Spannbügel 16 zurück in seine rechte äußere Position bewegt (Fig. 6). Das Erreichen dieser Position löst ein weiteres Steuersignal für den Pneumatikzylinder 20 aus, welcher sich nun vertikal nach oben zurückzieht, und die Spannvorrichtung 15 wieder in ihre in Fig. 5 dargestellte Stellung zurückbringt.

## Patentansprüche

1. Vorrichtung zum Ablängen von Hohlkammerprofilen (1) mit einer Gummidichtung (3), wobei das Hohlkammerprofil (1) auf einer Richtfläche (5) einer Maschine in einer definierten Lage im wesentlichen quer zu einer Bearbeitungseinheit (6) fixierbar ist, so daß ein die Gummidichtung (3) aufweisender Profilkörperbereich (2a) frei zugänglich ist,
dadurch **gekennzeichnet,**
daß eine Spannvorrichtung (15) zum Spannen der Gummidichtung (3) vorgesehen ist und
daß die Spannvorrichtug (15) zum lokalen Spannen der Gummidichtung (3) im Bereich eines auszuführenden Schnitts ausgebildet ist.

2. Vorrichtung nach Anspruch 1,
dadurch **gekennzeichnet,**
daß die Spannvorrichtung (15) einen Spannbügel (16) aufweist, welcher mittels Pneumatikzylindern (18, 20) entlang zweier im wesentlichen senkrecht zueinander verlaufender Achsen (X, Y) translatorisch verfahrbar ist, und
daß die Achsen (X, Y) eine Ebene definieren, die im wesentlichen parallel zu einer Ebene ist, in welcher ein Schnitt auszuführen ist.

3. Vorrichtung nach einem der Ansprüche 1 oder 2,
dadurch **gekennzeichnet,**
daß der Spannbügel (16) U-förmig ausgebildet ist und Schenkel (13a, 13b) und eine Nase (14) als Anschläge beim Spannen eines oder zum gleichzeitigen Spannen zweier Hohlkammerprofile (1) mit Gummidichtungen (3) aufweist, und
daß hierzu die Schenkel (13a, 13b) federnd zueinander angeordnet sind.

4. Vorrichtung nach einem der vorhergehenden Ansprüche,
dadurch **gekennzeichnet,**
daß die Pneumatikzylinder (18, 20) einen jeweiligen horizontalen und vertikalen Spannbereich definieren, die ein Spannen von Gummidichtungen (3) von Hohlkammerprofilen (1) unterschiedlicher Höhen und Breiten erlauben, die innerhalb der Spannbereiche liegen, wobei eine Anpassung an die Hohlkammerprofil-Geometrien automatisch erfolgt.

5. Vorrichtung nach einem der vorhergehenden Ansprüche,
dadurch **gekennzeichnet,**
daß die Spannkräfte in horizontaler und in vertikaler Richtung über den jeweiligen Spannbereich im wesentlichen konstant sind.

6. Vorrichtung nach einem der vorhergehenden Ansprüche,
dadurch **gekennzeichnet,**
daß die Pneumatikzylinder (18, 20) zur Übertragung von Kräften augelegt sind, die kleiner als der Widerstand des Profilkörpers (2) der Hohlkammperprofile (1) sind.

7. Vorrichtung nach einem der vorhergehenden Ansprüche,
dadurch **gekennzeichnet,**
daß die Spannvorrichtung (15) an einer Bearbeitungseinheit, insbesondere ein Sägeaggregat (6) montiert ist, und mit dieser in unterschiedliche Schnitt-Winkellagen schwenkbar ist.

8. Vorrichtung nach einem der vorhergehenden Ansprüche,
dadurch **gekennzeichnet,**
daß die Schenkel (13a, 13b) für Sägeschnitte unter 45^{o} und 90^{o} ausgebildet sind.

9. Vorrichtung nach einem der vorhergehenden Ansprüche,
dadurch **gekennzeichnet,**
daß der Spannungs- und Spannungslösungsvorgang der Spannvorrichtung (15) speicherprogrammierbar steuerbar ist.
